# EUROPEAN PATENT APPLICATION

(11) **EP 4 804 463 A1**
(43) Date of publication of application: **09.09.2026**
(21) Application number: 26157856.1
(22) Date of filing: 11.02.2026
(51) Int. Cl.: H04L 9/40, H04W 12/047, H04W 12/084, G06F 21/44

(54) **RAPID REGISTRATION OF DEVICES FOR AN ELECTRONIC MONITORING SYSTEM**

(30) Priority: 04.03.2025 US 202519069907
(71) Applicant: Arlo Technologies, Inc., Carlsbad, CA 92008 (US)
(72) Inventor: Whelan, Sean, Carlsbad, California, 92008 (US); Singh, Rajinder, San Jose, California, 95135 (US); Kelly, Fergal, Carlsbad, California, 92008 (US)
(74) Representative: Grünecker Patent- und Rechtsanwälte PartG mbB

(57) **Abstract**

A system and method for registering devices for use in an electronic monitoring system includes a router operative to establish a network connection to a backend system and to establish a local wireless network and a pair of Internet of Things (IoT) enabled device for the electronic monitoring system. A switch is manually activated, and an onboarding key and an intent to onboard key is received at the second device in response to switch activation. The onboarding key, which may be a signed onboarding key, is generated when a first device is registered to the electronic monitoring system. The onboarding key, the intent to onboard key, and an Internet of Things (IoT) certificate is transmitted to a backend system. A user account, corresponding to the onboarding key, and the IoT certificate is verified with the backend system. Network credentials are issued to the second device to execute in the electronic monitoring system.

## Description

### BACKGROUND OF THE INVENTION

### 1. Field of the Invention

This invention relates generally to registration of devices for electronic monitoring systems and, in particular, to a system and method for rapid registration of Internet of Things enabled devices for service in an electronic monitoring system.

### 2. Discussion of the Related Art

The Internet is a global system of interconnected computers and computer networks that communicate with each other. The Internet of Things (IoT) applies this concept to a network of linked everyday objects which can communicate, be read, recognized, located, and controlled via the internet or other communication networks.

The number and variety of IoT enabled devices continues to grow. In the area of automation of homes and buildings, smart homes and buildings may have centralized control over nearly any device or system in the home or office, from appliances to home and business security systems. In the field of asset tracking, commercial businesses, hospitals, factories, and large organizations can utilize IoT enabled devices to track the locations of various assets such as equipment, patients, products, vehicles, etc. In the area of health and wellness, doctors can remotely monitor patients' health, and laypeople can track the progress of fitness routines. In the area of personal safety, individuals can track their own location or the location of others, receive location-based notifications, and request security intervention or emergency services.

Traditional electronic monitoring systems include various devices configured to capture, store and transmit visual images and/or audio of a monitored area within the environment. In addition, these systems may include one or more sensors that are configured to detect one or more types of conditions or stimulus, microphones, sound sensors, lights, and speakers configured for audio communication or providing audible alerts. The various components of the electronic monitoring system interact with a cloud-based backend system or control service that controls functions or provides various processing tasks for the components of the system. In addition, a user device, such as a PC or desktop computer, or a mobile device, such as a smart phone, a tablet or the like, may be used by a user to configure or communicate with the various components of the electronic monitoring system and the control service.

In order to set up an electronic monitoring system, a user establishes an account with a service provider through the service provider's webpage or using the service provider's application on a user device. In the account, the user adds or onboards the various components of the electronic monitoring system associated with the user's account by utilizing, for example, a pre-populated list of devices and following a series of on-screen instructions. The process ensures that only the owner of the account has access to the various components and data associated with the account.

However, adding devices to a user's account can be a time-consuming process. Each time a device is to be added, the user must first log-in to the user's account using an application executing on a user's device. Each device must be identified by the user, and the application must establish communication with the device to obtain the device serial number and/or IoT birth certificate. The application transmits the device serial number and/or IoT birth certificate to the backend server for verification. The backend server performs verification of the device as a valid device to be added to the electronic monitoring system. For an IoT enabled device, the backend server will then transmit credentials for the IoT enabled device back to the application to communicate directly with the backend server. The application on the user's device, in turn, relays the network credentials to the device and setup of the device is complete. This process is repeated for each device to be registered with the user's account.

Therefore, it would be desirable to provide an improved system and method for registering devices for use in an electronic monitoring system.

### SUMMARY OF THE INVENTION

According to one embodiment of the invention, a method for registering devices for use in an electronic monitoring system having at least first and second monitoring devices. Registration of the second device is initiated by manually activating a switch to onboard a device of the electronic monitoring system. The switch may be a button. An onboarding key and an intent to onboard key is received at the second device, where the onboarding key is generated when a first device is registered to the electronic system. The onboarding key, the intent to onboard key, and an Internet of Things (IoT) certificate are transmitted to a backend system. A user account, corresponding to the onboarding key, and the IoT certificate is verified with the backend system. Credentials are issued to the second device to execute in the electronic monitoring system. The onboarding key may be signed.

According to one aspect of the invention, an application is executed on a user device. The application is in communication with the backend system via a first communication connection, and the application is in communication with the second device via a personal area network connection. The switch activation is detected with the application on the user device. The onboarding key, stored in the backend system, is retrieved with the application via the first communication connection. The onboarding key is encrypted and stored in the backend system after the first device is registered to the electronic system. The application decrypts and signs the onboarding key and then transmits the onboarding key to the second device.

According to another aspect of the invention, the intent to onboard key is generated with the application on the user device and transmitted to the second device from the user device. The network credentials are also transmitted from the user device to the second device, where the network credentials enable the second device to communicate directly with the backend system.

According to still other aspects of the invention, the switch may be a synchronize switch on the first device. Optionally, the switch may be a request to onboard switch on the second device. The onboarding key may be encrypted and stored in the first device after the first device is registered to the electronic system. If the onboarding key is stored in the first device, a personal area network connection is established between the first device and the second device. The first device detects activation of the switch, decrypts the onboarding key, signs the onboarding key, and transmits the onboarding key to the second device. The network credentials may be stored in the first device and transmitted from the first device to the second device.

According to yet another aspect of the invention, a user account is authenticated with an application executing on a user device. The first device to be registered to the electronic system is selected with the user account. An IoT certificate for the first device is transmitted to the backend system with the application executing on the user device. The IoT certificate for the first device is verified with the backend system, and the onboarding key for the user account is generated with the backend system after verifying the first device. The onboarding key may be encrypted with a public key for the user account, and the encrypted onboarding key stored either in the backend system, on the first device, on the user device, or on a hub for the electronic monitoring system.

According to another embodiment of the invention, a system for registering devices for use in an electronic monitoring system includes a router operative to establish a network connection to a backend system and to establish a local wireless network. A first Internet of Things (IoT) enabled device is provided for the electronic monitoring system, and a second IoT enabled device operative is provided to be registered in the electronic monitoring system. A manually activated switch, located on the first IoT enabled device, the second IoT enabled device, or in an application executing on a user device, is operative to initiate registration of the second IoT enabled device. The second IoT enabled device includes a memory operative to store instructions, a communication circuit operative to connect to the local wireless network, and a controller operative to execute the instructions. An onboarding key and an intent to onboard key are received by the controller. The onboarding key is generated when the first IoT enabled device is registered to the electronic monitoring system. The controller is further operative to transmit the onboarding key, intent to onboard key, and an Internet of Things (IoT) certificate to a backend system via the network connection and to receive credentials for execution in the electronic monitoring system responsive to the backend system verifying a user account corresponding to the onboarding key and verifying the IoT certificate.

These and other features and advantages of the invention will become apparent to those skilled in the art from the following detailed description and the accompanying drawings. It should be understood, however, that the detailed description and specific examples, while indicating preferred embodiments of the present invention, are given by way of illustration and not of limitation. Many changes and modifications may be made within the scope of the present invention without departing from the spirit thereof, and the invention includes all such modifications.

### BRIEF DESCRIPTION OF THE DRAWINGS

Preferred exemplary embodiments of the invention are illustrated in the accompanying drawings in which like reference numerals represent like parts throughout, and in which:
FIG. 1 is a block diagram of a system for electronic monitoring in accordance with one embodiment of the present invention;
FIG. 2 is a partial block diagram representation of the system of FIG. 1;
FIG. 3 is a perspective view of one embodiment of a monitoring device for the electronic monitoring system of Fig. 1;
FIG. 4 is a flow diagram illustrating steps for registering a first device in the electronic monitoring system of Fig. 1 according to one embodiment of the invention; and
FIG. 5 is a flow diagram illustrating steps for registering additional devices in the electronic monitoring system of Fig. 1 according to one embodiment of the invention.

### DETAILED DESCRIPTION OF THE DRAWINGS

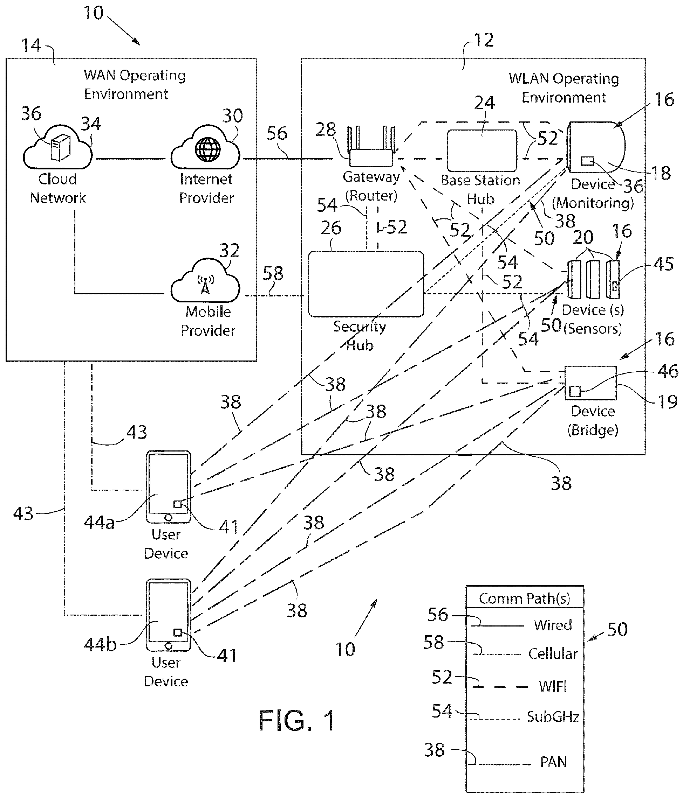

Referring to FIG. 1, an electronic monitoring system 10 in accordance with an aspect of the present invention is generally shown. Electronic monitoring system 10 is implemented in a wireless communication operating environment. For example, wireless communication may be implemented by a WLAN (wireless local area network) operating environment (WLAN 12) or by communications technology on a personal area network (PAN) between the various components of electronic monitoring system 10 and/or one or more user devices 44, as hereinafter described. As mentioned above, communications may occur using Bluetooth^{®} technology, but may also occur using Zigbee^{®} or another short-range protocol. The term "PAN" should be understood to encompass all such communication technologies and protocols.

In the depicted embodiment, WLAN 12 is communicatively connected to a WAN (wide area network) operating environment, designated by the reference numeral 14. Within WLAN 12, various peripheral devices, also known as "client devices" 16, such as monitoring devices 18, bridges 19 and sensors 20, are wirelessly networked to a base station or high frequency hub 24 which, in turn, communicates with the WAN 14 via a gateway hub shown as gateway router 28. Base station hub 24 and router 28 provide a high frequency connection to WAN 14. Base station hub 24 may be eliminated as a stand-alone module if its functionality is incorporated into the gateway router 28, in which case the router 28 also serves as a base station hub. The system may also include a security hub 26 that communicates with monitoring device(s) 18 and with the WAN 14 and provides a low frequency connection between the WAN 14 and monitoring devices 18. If present, the security hub 26 may also communicate with the router 28 or hub 24, such as through a high frequency communication path 52 and/or a low frequency communication path 54 to the router 28. The security hub 26 is also provided with the capability of providing a high frequency connection with monitoring devices 18.

According to one aspect of the invention, the "client devices" 16 may be configured as Internet of Things (IoT) devices. Rather than being connected to the base station, or high frequency hub, 24, each of the monitoring devices 18, bridges 19 and/or sensors 20 may be configured to communicate directly with the Internet. While these devices may be configured to communicate to the base station 24 for localized reporting, monitoring, or other functions performed by the base station 24, they are also able to connect directly to the Internet provider 30 via the gateway router 28 and need not first communicate with the hub 24. Utilizing the ability of an IoT enabled device to directly communicate with the Internet can streamline registration of devices for use in the electronic monitoring system 10, as will be discussed in more detail below.

Still referring to FIG. 1, gateway router 28 is typically implemented as a Wi-Fi hub that communicatively connects WLAN 12 to WAN 14 through an internet provider 30. Internet provider 30 includes hardware or system components or features such as last-mile connection(s), cloud interconnections, DSL (digital subscriber line), cable, and/or fiber-optics. As mentioned, the functionality of the base station hub 24 also could be incorporated into the router 28, in which case the router 28 becomes the base station hub, as well as the router. Another connection between WLAN 12 and WAN 14 may be provided between security hub 26 and a mobile provider 32. Mobile provider 32 includes hardware or system components or features to implement various cellular communications protocols such as 3G, 4G, LTE (long term evolution), 5G, or other cellular standard(s). Besides the mobile connection, security hub 26 typically also is configured to connect to WAN 14 by way of its connection to gateway router 28 and the gateway router's connection to WAN 14 through internet provider 30. Each of the internet provider 30 and mobile provider 32 allows the components of electronic monitoring system 10 to interact with a backend system or control service that can control functions or provide various processing tasks of components of electronic monitoring system 10, shown as a cloud-based backend control service system 34, which could be an Arlo SmartCloud^{™} system. The backend system, such as the cloud-based control service system 34 includes at least one cloud-based server 36, each of which includes at least a power supply, a system board, one or more CPUs, memory, storage, such as a sharable database, and a network interface. The at least one cloud-based server 36 typically provides, for example, cloud-base onboarding capabilities for peripheral client devices 16, cloud storage of data, for example events, AI (artificial intelligence) based processing such as computer vision, and system access to emergency services.

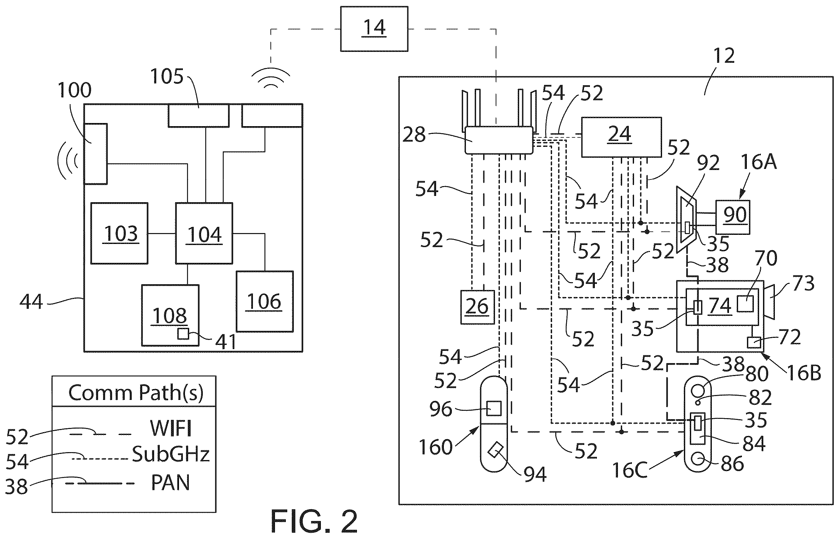

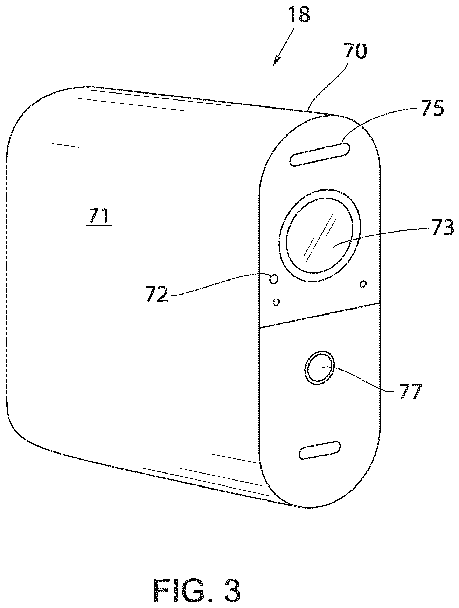

As noted above, the client devices 16 of electronic monitoring system 10 may include one or more monitoring devices 18 that are mounted to face toward respective areas being monitored, such as around a building or other structure or area. Monitoring devices 18 may perform a variety of monitoring, sensing, and communicating functions. With reference also to FIGS. 2 and 3, each monitoring device 18 may include a camera 70 and/or a microphone 72 to obtain video and/or audio data from an area being monitored. The monitoring device 18, as illustrated in Fig. 3, includes a housing 71 with a lens 73 mounted on the front of the housing. The lens 73 provides an expanded field of view, such as a one hundred-eighty degree field of view. An integrated light emitting diode (LED) floodlight 75 may be provided to illuminate the field of view, if desired. The LED floodlight 75 may, for example, be normally off but programmed to illuminate a target region when motion is detected by the camera 70. The lens 73 receives light in the visible spectrum and/or an additional spectrum, such as the infrared or ultraviolet spectrum and directs the light to an image sensor on a control circuit. The image sensor may be a charge-coupled device (CCD), an active-pixel device fabricated on a complementary metal-oxide semiconductor (CMOS) device, or any other suitable sensor to convert light received at the lens to an electronic signal suitable for use in the control circuit 74. The monitoring device 18 also includes at least one manually activated switch that can used to initiate registration of the monitoring device 18 via an Internet connection. The switch is a button 77 in the present example, but could be a toggle switch, a rocker switch, etc. If a button 77 is employed, the button could be physical button, a pressure pad, a capacitive sensor, or any other device responsive to manual contact. The terms "switch" and "button" may be used interchangeably herein for the sake of convenience, and either term should be construed to encompass all such switches, including but not limited to, buttons that are pressed.

According to one aspect of the invention, a first button may be provided to initiate registration of the present monitoring device 18 with the cloud-based control service system 34, and a second button may be provided to initiate registration of a second device, in communication with the first device, with the cloud-based control service system 34. According to still another aspect of the invention, a single button may provide both functions, where activation of the button initiates registration of the monitoring device 18 if it has not yet been registered, and a press of the button will seek to initiate registration of another device, in communication with the first device, if the first device has been registered. According to yet another aspect of the invention the monitoring device 18 may have just a single button 77 dedicated to initiate registration of the corresponding device 18.

The monitoring device 18 includes firmware stored in non-volatile memory thereon and a control circuit 74 to execute the firmware. As is conventional, the firmware acts as the monitoring device's complete operating system, performing all control, monitoring and data manipulation functions. The control circuit 74 receives the feedback signals from the camera 70 and/or microphone 72 and transmits data to the base station hub 24 and/or the security hub 26. The control circuit 74 also receives a signal from the button 77 indicating that the button has been activated and may subsequently execute instructions stored within the firmware to register the device to the cloud-based control service system 34. Monitoring may also be incorporated into other client devices. A doorbell 16C, for example, may include a camera 80 and/or microphone 82 included within the doorbell, and may also include a button 77. The doorbell 16C includes firmware stored in non-volatile memory thereon and a control circuit 84 to execute the firmware. The control circuit 84 receives a signal from a button 86 on the doorbell as is conventional for signaling the presence of a person at the door, but the control circuit 84 also receives the feedback signals from the camera 80 and/or microphone 82 and transmits data to the base station hub 24 and/or the security hub 26.

The system 10 may also include device(s) and system(s) that perform functions other than monitoring. Such devices include smart home devices such as HVAC control systems and other components. FIG. 2 illustrates two such devices as a floodlight 16A and an electronic door lock 16D. The floodlight 16A includes a lamp 90 to illuminate a desired area and a control circuit. Firmware is stored in non-volatile memory firmware on the floodlight 16A. The control circuit 92 executes the firmware acting as the floodlight's complete operating system, performing all control, monitoring and data manipulation functions. The electronic door lock 16D includes a lock portion 94, which may be manually operated or automatically operated by a motor within the lock portion, and a control circuit 96. Firmware is stored in non-volatile memory firmware on the electronic door lock 16D. The control circuit 96 executes the firmware acting as the electronic door lock's complete operating system, performing all control, monitoring and data manipulation functions. Additional devices 16 could include one-touch type communication devices such as panic buttons and other communication buttons. One such communication device is marketed under Arlo Technologies, Inc. of Carlsbad, California under the brand name ARLO SAFE^{™}. Although the illustrated devices 16A and 16D do not include a camera or microphone, some embodiments may include a camera and/or microphone. As such, all of the devices 16 and systems can be considered "monitoring devices" for purposes of the present discussion. Devices that communicate using LE protocols such as Bluetooth^{®} can be considered "LE devices".

As indicated above, one monitoring device may include an imaging device, such as a video camera 70, that is configured to capture and store visual images or video of the monitored area within the environment, e.g., an Arlo^{®} camera available from Arlo Technologies, Inc. of Carlsbad, California. In addition to containing a camera 70, the monitoring device 18 may also include one or more sensors configured to detect one or more types of conditions or stimuli, for example, motion, opening or closing events of doors or windows, the presence of smoke, carbon monoxide, water leaks, and temperature changes. Instead of, or in addition to, containing sensors, the monitoring device 18 may have audio device(s) such as microphones 72, sound sensors, and speakers configured for audio communication or providing audible alerts. Other types of monitoring devices 18 may have some combination of sensors 20 and/or audio devices without having imaging capability. One such device is Arlo Chime^{™} which has only audio capabilities. Sensors 20 or other monitoring devices 18 also may be incorporated into form factors of other house or building accessories, such as doorbells 16C, floodlights 16A, etc.

In order to allow for low and high frequency communication on WLAN 12, it is contemplated for monitoring devices 18 to have two radios operating at different frequencies. A first, "primary" radio operates at a first frequency, typically at a relatively high frequency, typically of 2.4 GHz to 5 GHZ, during periods of normal conductivity to perform monitoring and data capture functions such as video capture and transmission, sound transmission, motion sensing, etc. The second or "secondary radio" operates at a second frequency that is immune to, or at least resistant to, signals that typically jam other signals over the first frequency. The second frequency may be of considerably lower frequency in the sub-GHz or even RF range and may have a longer range than the primary radio. It is intended for the secondary radio to be operable when communications over the primary communication path are disrupted in order to permit the continued operation of monitoring devices 18, as well as to permit transmit and display information regarding the communications disruption to be transmitted and displayed for a user. The term "disruption," as used herein, applies equally to an initial failure to connect over the primary communication path upon device startup and a cessation or break in connection after an initial successful connection. In addition, it is contemplated for each monitoring device 18 to include Bluetooth^{®} or any PAN communications module 35 designated for wireless communication. As is known, module 35 allows monitoring devices 18 to communicate directly with one or more user devices 44 over a wireless Personal Area Network (PAN) via one or more PAN communication protocols such as Bluetooth^{®}, Zigbee^{®}, Z-Wave^{™}, and MQTT^{™}. Likewise, sensors 20 may similarly include Bluetooth^{®} or any PAN communications module 45 to allow sensor 20 to communicate directly with one or more user devices 44 over a wireless Personal Area Network (PAN) 38 using one or more PAN communication protocols.

One or more user devices 44, such as a mobile device, smart phone, tablet, laptop, or PC, may communicate with various components of the electronic monitoring system 10. It can be understood that user devices 44 may communicate with the various components of electronic monitoring system 10 utilizing WLAN 12, WAN 14 and/or PAN 38 to provide an interface through which a user may interact with electronic monitoring system 10, including client devices 16, the base station hub 24, the security hub 26, and/or the gateway 28. With reference also to FIG. 2, the user device 44 may include multiple communication modules, including a PAN communications module 100 designated for wireless communication using low energy "LE" protocols. The PAN communications module 100 may be a Bluetooth^{®} module allowing the user device 44 to communicate with other user devices 44, the bridge 19, client devices 16 or various other components in the monitoring system 10. Furthermore, in those embodiments of the user device 44, in which the user device 44 is a mobile device, smart phone, tablet or the like, the user device may include a cellular communications module 102 configured for cellular communication. The user device 44 may communicate with the WAN 14 over a cellular communication path 43 between the user device 44 and the mobile provider 32. Accordingly, through communication with the mobile provider 32, each user device 44 may form a communication pathway with the at least one cloud-based server 36 of the cloud-based control service system 34. Alternatively, when operating within WLAN 12, the cellular equipped user device 44 may alternatively communicate with the WAN 14 via the cellular communication path 43 or the gateway router 28 in communication with the internet provider 30. Whether through the Wi-Fi connection to the gateway router 28 or its respective internet provider 30, the user device 44 is configured to form a communication pathway with the cloud-based server 36.

The user device 44 may also include a position information interface 105. The position information interface 105 is in communication with one or more external sources to obtain position information for the device. According to one aspect of the invention, the position information interface 105 is in communication with multiple local substations, such as cellular towers. Each cellular tower has knowledge of its location either via data stored at the tower or via communication with a satellite positioning service. The user device 44 determines its distance from each of the local substations and receives the location data for the local substation. Using the position data for each local substation and triangulation, the user device 44 determines its present location. According to another aspect of the invention, the user device 44 may be in direct communication with the satellite positioning service. The satellite position service may be, for example, the Global Positioning System (GPS), Galileo, or the like, and directly provide information to the user device 44 of the present location of the device.

Each user device 44 includes memory 106 with an operating system and applications stored therein. A processor 104 is provided to execute the applications and to send and receive data from the communications modules 100, 102. A clock circuit 103 is illustrated in communication with the processor 104. The clock circuit 103 maintains a real-time value of the present time. Optionally, the clock circuit 103 may be a module executing on the processor 104. Each user device 44 further includes a user interface 108. The user interface 108 may include a microphone to receive audio from a user, a speaker to playback audio for the user, a video display system that typically includes a touchscreen to both display video data to and receive input from the user. Each user device may include an application stored in memory 106 and executable by the processor 104 to interact with the system 10. One such application is the Arlo^{®} Smart application, which is displayed on the user interface 108 and which includes at least one actuatable user input 41. In response to the information provided on the display of the one or more user devices 44, a user may actuate the at least one actuatable user input 41.

Referring to again FIG. 1, within WLAN 12, multiple communication paths 50 are defined that transmit data between the various components of system 10. Communication paths 50 include a default or primary communication path 52 providing communication between monitoring device 18 and the base station hub 24, and a fail-over or fallback secondary communication path 54 providing communication between monitoring device 18 and the security hub 26. Optionally, some of the monitoring devices 18 that do not require high bandwidth to operate may only communicate through the secondary communication path 54, such as sensors 20 shown in FIG. 1. Thus, even during a failure of the primary communication path 52, sensors 20 will continue to operate normally. A collective area in which device communication can occur through the primary communication path 52 defines a primary coverage zone. A second, typically extended, collective area in which the peripheral device communication can occur through the secondary communication path 54 defines a secondary coverage zone. A wired communication path 56 is shown between the router 28 and the internet provider 30, and a cellular communication path 58 is shown between security hub 26 and mobile provider 32. WAN 14 typically includes various wireless connections between or within the various systems or components, even though only wired connections 56 are shown. If the security hub 26 and the associated secondary communication path 54 are not present, the sensors 20 may communicate directly with the base station hub 24 (if present, or the router 28 if the functionality of the base station hub is incorporated into the router) via the primary communication path 52. Primary communication path 52 also extends between bridge 19 and the base station hub 24, and secondary communication path 54 may provide for fail-over or fallback communication between bridge 19 and the security hub 26, if the security hub 26 is present. The controllers of bridges 19 may also provide a wireless communication path directly to the router 28.

As described, electronic monitoring system 10 is configured to implement a seamless Over-The-Air (OTA) communication environment for each client device 16 by implementing a communication path switching strategy as a function of the operational state of primary and/or secondary communication paths, as heretofore described. For example, each monitoring device 18 is configured to acquire data and to transmit the acquired data, or data obtained by processing the acquired data, to a respective hub 24 and/or 26 for further processing and/or further transmission to a server such as the server 36 of the cloud-based control service system 34 and/or the user device(s) 44. The server 36 or other computing components of system 10 or otherwise in the WLAN 12 or WAN 14 can include, or be coupled to, a microprocessor, a microcontroller or other programmable logic element (individually and collectively considered "a controller") configured to execute a program. The controller also may be contained in whole in the monitoring device 18, base station hub 24, security hub 26, and/or the WIFI hub or router 28. Alternatively, interconnected aspects of the controller and the programs executed by it could be distributed in various permutations within the monitoring device 18, the hubs 24 and 26, router 28, and the server 36. This program may be utilized in filtering, processing, categorizing, storing, recalling, and transmitting data received from the monitoring device 18 via the hubs 24 and 26, router 28, and server 36. Server 36 or another appropriate system device may also be in communication with or include a computer vision program ("CV"), which can apply one or more filters or processes, such as edge detection, facial recognition, motion detection, etc., to detected one or more characteristics of the recording such as, but not limited to, identifying an individual, animal, vehicle, or package present in the recording.

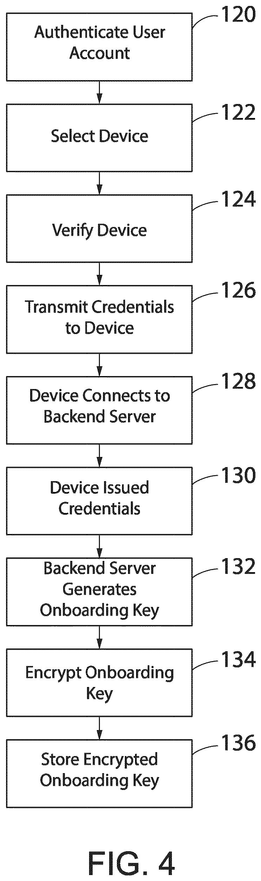

In operation, the electronic monitoring system disclosed herein provides an improved system and method for registering devices for use in the electronic monitoring system 10. With respect to Fig. 4, the steps required for registering a first client device 16 to the electronic monitoring system 10 are illustrated. When setting up a new system, a user must first establish an account with a service provider, e.g., Arlo, through the service provider's webpage or using the service provider's software application on user device 44. Optionally, a user may already have an account established with a prior electronic monitoring system and may be able to log into an existing account. As shown in step 120, the user's account will be authenticated. During setup of the user account, a user will provide log in credentials, such as a user name and password. Optionally, biometric authentication, such as a fingerprint or facial recognition may be setup. Similarly, a user may establish two-step authentication via a text message, e-mail, third-party verification application, or other such second steps to enhance security during a login attempt. The application executing on the user device 44 is in communication with the cloud-based, backend control service system 34 to receive the log-in credentials and to verify that the user does have authorization to access and configure the user account.

At step 122, the user will select a device 122 to be registered to the electronic monitoring system 10. According to one aspect of the invention, the application executing on the user's device 44 will include a user interface, such as icons, menus, or the like which prompt the user for selection of the device 122 to be added to the monitoring system 10. For purposes of discussion herein, a first user device may be a first monitoring device 18, e.g., an Arlo^{®} camera available from Arlo Technologies, Inc. of Carlsbad, California. The user will select the appropriate monitoring device 18 for inclusion in the monitoring system 10 from the application.

It is a feature of the present invention that the client devices 16 being registered to the electronic monitoring system 10 are IoT enabled devices. Each client device 16 is, therefore, capable of communicating directly with the Internet. Each client device 16 also includes what is referred to as an IoT birth certificate, or just an IoT certificate. The IoT certificate, is used by the client device 16 for communication between other connected devices and establishes a digital identity for the device. The IoT certificate may include, for example, a unique serial number for the client device 16, a date of manufacture, a manufacturer identify, and a signing authority, which signs the IoT certificate. The manufacturer stores the signed IoT certificate on the device 16 and may later utilize the signed IoT certificate to verify authenticity of the device.

However, during this initial registration process, no client device 16 has yet been registered with the backend system 34. As a result, a user must first manually present a device for inclusion in the electronic monitoring system 10. As previously discussed, the user selects a device using the application executing on the user device 44. However, the application only identifies a type of device for inclusion and does not identify a specific instance of the device. The user device 44, therefore, establishes communication with the selected device 44 via a local area network, the WLAN 12, a PAN communication 38 between devices, or any other suitable communication method to retrieve the IoT certificate from the first monitoring device 18 to be included in the electronic monitoring system. The application transmits the IoT certificate to the backend system 34, where the backend system compares the IoT certificate to a stored registry of devices. If the IoT certificate is found on the stored registry, the backend system has verified the authenticity of the device. The backend system 34 returns a verification successful message to the application executing on the user device 44 such that the user device 44 knows the client device 16 is authorized to be registered to the monitoring system 10.

Upon verifying authenticity of the client device 16, application executing on the user device 44 transmits login credentials to the client device 16, as shown in step 126. These login credentials permit the client device to access the backend system and, more specifically, the user's account on the backend system 34 directly without requiring the application executing on the user device 44 as an intermediary. The client device 16 now connects directly to the backend system 34 using the login credentials, as shown in step 128. The backend system 34 now establishes further credentials for the client device 16 such that the client device may in the future directly communicate with the backend system 34 rather than requiring the application executing on the user device 44, a base hub 24, or other such device within the electronic monitoring system 10 to serve as an intermediary device to establish an initial connection with the backend system. The network credentials include a unique identifier, a verification token, and a public key infrastructure (PKI) certificate. The backend system 34 issues these credentials to the client device 16.

Previously, the above-described steps would be required to register every client device 16 to the electronic monitoring system 10. The additional steps illustrated in Fig. 4 allow subsequent client devices 16 to registered to the electronic monitoring system in a more efficient manner. At step 132, the backend server 34 generates an onboarding key. The onboarding key may be generated using, for example, a random number generator or a pseudo-random number generator. According to still another option, the user credentials or a portion thereof may be passed through a hash algorithm or other such routine that generates a unique identifier for the user account. The onboarding key is a unique identifier corresponding to the user's account. As further shown in steps 134 and 136, the backend server 34 may then utilize a public key, corresponding to the user's account, to encrypt the onboarding key and store the encrypted onboarding key on the backend server 34 for subsequent use to register additional devices to the electronic monitoring system 10.

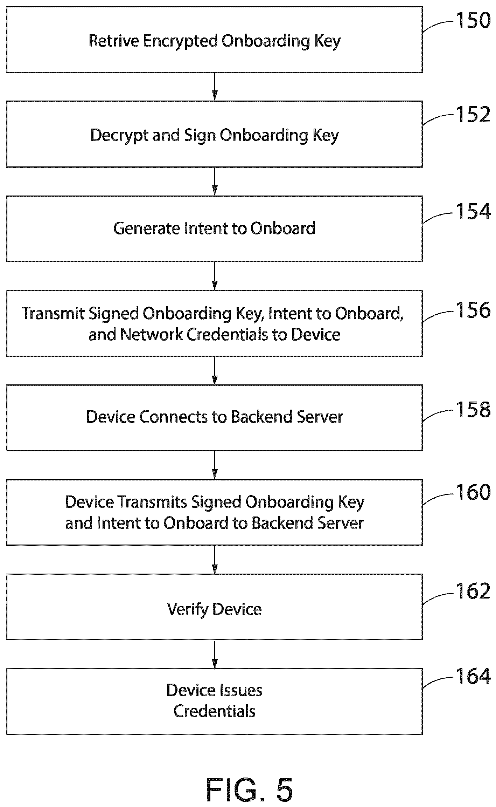

Turning next to Fig. 5, a flowchart illustrating steps for registering additional client devices 16 to the electronic monitoring system 10 are illustrated. The subsequent process utilizes the onboarding key generated during registration of the first client device 16 to provide an improved system and method for registering devices for use in an electronic monitoring system. The improved system simplifies the steps in the process and, in a preferred embodiment, provides for registration of additional client devices 16 by a single button press.

With reference, for example, to Fig. 3, a button 77 on the monitoring device 18 may be utilized to initiate registration of additional client devices 16. According to one aspect of the invention, the button 77 is configured to indicate the monitoring device 18 is attempting to register to an electronic monitoring system 10. The user may place the monitoring device 18 in proximity to the user device 44 such that a PAN communication connection 38 is established between the devices. Optionally, the monitoring device 18 may be mounted, for example, on a house, garage, or other building where the monitoring device 18 is intended to provide video surveillance of a monitored region. The user device 44 may be brought in proximity the monitoring device 18 to establish the PAN communication connection between the two devices. According to still another option, the monitoring device 18 may be mounted in its intended location and detect the presence of a WIFI connection 52 to a WLAN 12 on which the user device 44 is also connected. With both the monitoring device 18 and the user device 44 on a common WLAN 12, the devices may communicate with each other. Having established a communication connection between the monitoring device 18 and the application executing on the user device 44, pressing the button 77 on the monitoring device 18 will initiate registration of the additional monitoring device for use in the electronic monitoring system 10.

According to one aspect of the invention, pressing of the button 77 on the monitoring device 18 generates a signal to the control circuit 74, indicating the monitoring device is requesting registration. The monitoring device 18 passes the signal to the application executing on the user device 44 to indicate to the application that the monitoring device seeks registration in the user's account. The application is in communication with the backend system 34 and, therefore, may request the encrypted onboarding key, corresponding to the user's account, from the backend system. As shown in step 150, the application on the user device 44 retrieves the encrypted onboarding key. Because the onboarding key was encrypted using a public key for the user's account, the application executing on the user device 44 has access to the private key and is able to decrypt the encrypted onboarding key, as shown in step 152. The application executing on the user device 44 further signs the decrypted onboarding key using a private key for the user's account. The application on the user device 44 also generates an intent to onboard key, as shown in step 154, indicating there is a client device 16 which seeks to be registered to the user account. The intent to onboard key may be generated using, for example, a random number generator or a pseudo-random number generator. At step 156, the application on the user device 44 then transmits the signed onboarding key, the intent to onboard key, and network credentials to the monitoring device 18. The network credentials are those credentials required for the monitoring device 18 to log into the user account on the backend system 34.

Having received the keys and credentials from the user device 44, the second monitoring device 18 is now ready to register itself with the user's account. Because the monitoring device 18 is an IoT enabled device it is configured to communicate directly via the Internet to the backend system 34. The monitoring device 18 is configured to communicate with the router 28 via the WLAN 12. Once connected to the router 28, the monitoring device 18 connects to the Internet provider 30 and, in turn, to the backend system 34, as indicated in step 158. The monitoring device 18 utilizes the network credentials to identify to the backend system 34 which user account and, in turn, to which electronic monitoring system 10 it is attempting to register. The monitoring device 18 transmits the signed onboarding key, the intent to onboard key, and its IoT certificate to the backend system 34. The backend system 34 has a copy of the public key for the user's account and is able to verify the signed onboarding key. The backend system 34 is further able to verify the intent to onboard key to confirm that the monitoring device 18 is entitled to be registered to the user's account and to the user's electronic monitoring system. In a manner similar to that discussed above with respect to the first monitoring device, the backend system 34 then verifies the IoT certificate and issues credentials to the monitoring device 18, completing registration of the second monitoring device 18 to the electronic monitoring system, as shown in steps 162 and 164.

The generation of an onboarding key and intent to onboard key permit subsequent client devices 16 to register to the electronic monitoring system 10 with a single press of a button 77 rather than requiring a user to follow the multiple step process via an application executing on the user device 44 as described with respect to the first client device. This process for additional client devices 16 simplifies the registration process.

According to another embodiment of the invention, the encrypted onboarding key may be stored locally in one or more of the client devices 16 and/or hub 24 rather than, or in addition to, the backend system 34. With the encrypted onboarding key stored locally, additional client devices 16 may be registered to the electronic monitoring system 10 by placing the additional device in proximity to another device on which the encrypted onboarding key is stored. The two devices establish a PAN connection 38 by which the first device provides the onboarding key to the second device. The first device may be configured to decrypt and sign the onboarding key. Network credentials for communicating with the backend system 34 are stored in the registered device. Therefore, the first device is able to provide the network credentials and the signed onboarding key to the second device. Either the first device or the second device may be configured to generate the intent to onboard key. The second device may then follow steps 158-164 of the flow diagram in Fig. 5 to register with the backend system 34 and become operational in the electronic monitoring system 10.

With the encrypted onboarding key stored locally in a client device 16, the button 77 on the device may be utilized as a synchronize button to initiate a registration process for additional devices. When the second device is brought within range of the first device, a user may press the button 77 on the first device to initiate registration of the second device. The first device decrypts and signs the onboarding key. The first device then transmits the signed onboarding key and network credentials to the second device. Either the first device or the second device may be configured to generate an intent to onboard key. The second device is then able to communicate with the backend system 34 to register itself to the electronic monitoring system.

Although the best mode contemplated by the inventors of carrying out the present invention is disclosed above, practice of the above invention is not limited thereto. It will be manifest that various additions, modifications and rearrangements of the features of the present invention may be made without deviating from the spirit and the scope of the underlying inventive concept.

It should be appreciated that such a development effort might be complex and time consuming, but would nevertheless be a routine undertaking of design, fabrication, and manufacture for those of ordinary skill having the benefit of this disclosure. Nothing in this application is considered critical or essential to the present invention unless explicitly indicated as being "critical" or "essential."
Following are further aspects of the invention:
A first aspect, wherein the application on the user device is further configured to:
   generate the intent to onboard key; and
   transmitting the intent to onboard key to the second IoT enabled device.
A second aspect, wherein the application on the user device is further configured to transmit network credentials from the user device to the second IoT enabled device, wherein the network credentials enable the second IoT enabled device to communicate directly with the backend system.
A third aspect, wherein the first IoT enabled device is further configured to store network credentials and to transmit the network credentials from the first IoT enabled device to the second IoT enabled device, wherein the network credentials enable the second IoT enabled device to communicate directly with the backend system.
A fourth aspect, wherein the first IoT enabled device is further configured to:
   generate the intent to onboard key, and
   transmit the intent to onboard key to the second IoT enabled device.
A fifth aspect, wherein the second IoT enable device is further configured to generate the intent to onboard key.

## Claims

1. A method for registering devices for use in an electronic monitoring system having first and second monitoring devices, comprising:
registering the first device to the electronic monitoring system;
generating an onboarding key as a result of the registration of the first device;
manually activating a switch to initiate registration of the second device;
receiving the onboarding key and an intent to onboard key at the second device;
transmitting the onboarding key, the intent to onboard key, and an Internet of Things (IoT) certificate to a backend system;
verifying a user account corresponding to the onboarding key with the backend system;
verifying the IoT certificate with the backend system; and
issuing network credentials to the second device to execute in the electronic monitoring system.

2. The method of claim 1, wherein the switch is a synchronize button on the first device or a a request to onboard button on the second device.

3. The method of claim 1 or claim 2, further comprising:
executing an application on a user device, wherein:
the application is in communication with the backend system via a first communication connection, and
the application is in communication with the second device via a personal area network connection;
detecting activation of the switch with the application on the user device;
retrieving the onboarding key stored in the backend system with the application via the first communication connection, wherein the onboarding key is encrypted and stored in the backend system after the first device is registered to the electronic monitoring system;
decrypting the onboarding key with the application;
signing the onboarding key with the application; and
transmitting the signed onboarding key to the second device from the application.

4. The method of claim 3, further comprising:
generating the intent to onboard key with the application on the user device; and
transmitting the intent to onboard key to the second device from the user device.

5. The method of claim 4, further comprising transmitting the network credentials from the user device to the second device, wherein the network credentials enable the second device to communicate directly with the backend system.

6. The method of any of the preceding claims, wherein the onboarding key is encrypted and stored in the first device after the first device is registered to the electronic monitoring system, the method further comprising:
establishing a personal area network connection between the first device and the second device;
detecting activation of the switch with the first device;
decrypting the onboarding key with the first device;
signing the onboarding key with the first device; and
transmitting the signed onboarding key to the second device from the first device.

7. The method of claim 6, wherein the network credentials are stored in the first device, and further comprising transmitting the network credentials from the first device to the second device, wherein the network credentials enable the second device to communicate directly with the backend system.

8. The method of any of the preceding claims, further comprising:
authenticating a user account with an application executing on a user device;
selecting the first device to be registered to the electronic monitoring system with the user account;
transmitting an IoT certificate for the first device to the backend system with the application executing on the user device;
verifying the IoT certificate for the first device with the backend system; and
generating the onboarding key for the user account with the backend system after verifying the first device.

9. The method of claim 8, further comprising:
encrypting the onboarding key with a public key for the user account; and
storing the encrypted onboarding key either in the backend system, on the first device, on the user device, or on a hub for the electronic monitoring system.

10. A system for registering devices for use in an electronic monitoring system, comprising:
a router operative to establish a network connection to a backend system and to establish a local wireless network;
a first Internet of Things (IoT) enabled device that is configured for use in the electronic monitoring system;
a second IoT enabled device that is operative to be registered in the electronic monitoring system; and
a switch located on the first IoT enabled device, the second IoT enabled device, or in an application executing on a user device, wherein the switch is configured to be responsive to manual activation thereof to initiate registration of the second IoT enabled device, and wherein the second IoT enabled device further comprises:
a memory operative to store a plurality of instructions;
a communication circuit operative to connect to the local wireless network; and
a controller operative to execute the plurality of instructions to:
receive an onboarding key and an intent to onboard key, wherein the onboarding key is generated when the first IoT enabled device is registered to the electronic monitoring system;
transmit the onboarding key, intent to onboard key, and an Internet of Things (IoT) certificate to a backend system via the network connection;
receive network credentials for execution in the electronic monitoring system responsive to the backend system verifying a user account corresponding to the onboarding key and verifying the IoT certificate.

11. The system of claim 10, further comprising a user device operative to execute an application for communication with the backend system via the network connection and for communication with the second device via a personal area network connection.

12. The system of claim 11, wherein the application on the user device is further configured to:
detect the switch being activated to initiate registration of the second IoT enabled device;
retrieve the onboarding key from the backend system, wherein the onboarding key is encrypted and stored in the backend system after the first device is registered to the electronic monitoring system;
decrypt the onboarding key;
sign the onboarding key; and
transmit the signed onboarding key to the second IoT enabled device.

13. The system of any of claims 10-12, wherein the first IoT enabled device is configured to:
store the onboarding key after being registered to the electronic monitoring system;
establish a personal area network connection between the first IoT enabled device and the second IoT enabled device;
detect the switch being activated to initiate registration of the second IoT enabled device;
decrypt the onboarding key;
sign the onboarding key; and
transmit the signed onboarding key to the second IoT enabled device.

14. The system of any of claims 10-13, wherein:
the backend system is configured to encrypt the onboarding key with a public key for the user account; and
the encrypted onboarding key is stored either in the backend system, on the first IoT enabled device, on the user device, or on a hub for the electronic monitoring system.
